# EUROPEAN PATENT APPLICATION

(11) **EP 4 841 450 A1**
(43) Date of publication of application: **18.11.2026**
(21) Application number: 25747764.6
(22) Date of filing: 23.01.2025
(51) Int. Cl.: G06F 11/36

(54) **APPLICATION RISK DETECTION METHOD AND APPARATUS**

(30) Priority: 31.01.2024 CN 202410146516
(71) Applicant: Yinwang Intelligent Technologies Co., Ltd., Shenzhen, Guangdong 518110 (CN)
(72) Inventor: CHEN, Yunsheng, Shenzhen, Guangdong 518129 (CN); SHEN, Weifeng, Shenzhen, Guangdong 518129 (CN); XIANG, Guangte, Shenzhen, Guangdong 518129 (CN); LIU, Lu, Shenzhen, Guangdong 518129 (CN); LV, Qiantao, Shenzhen, Guangdong 518129 (CN)
(74) Representative: Maiwald GmbH
(86) International application number: PCT/CN2025/074451
(87) International publication number: WO 2025/162196

(57) **Abstract**

This application provides an application risk detection method and apparatus, and relates to the field of risk detection technologies, which can perform risk detection on an application, so as to determine an object having a cross-operating system application risk in the application. The method includes: obtaining a calling relationship between M objects of an application, and determining, based on the calling relationship between the M objects and an operating system application to which each object belongs, an object having a risk. M is greater than or equal to 2, and the object includes a function and/or a variable. The calling relationship between the M objects includes at least one of a function accessing a variable, a first function calling a second function, a first variable referring to a second variable, or a variable referring to a function. At least two operating system applications have different risk levels.

## Description

This application claims priority to Chinese Patent Application No. 202410146516.0, filed with the China National Intellectual Property Administration on January 31, 2024 and entitled "APPLICATION RISK DETECTION METHOD AND APPARATUS", which is incorporated herein by reference in its entirety.

### TECHNICAL FIELD

This application relates to the field of risk detection technologies, and in particular, to an application risk detection method and apparatus.

### BACKGROUND

An automotive open system architecture (automotive open system architecture, AUTOSAR) is a software architecture system jointly established by global automakers, component suppliers, and other electronic, semiconductor, and software system companies, with members maintaining a cooperative development partnership. The AUTOSAR is committed to developing open and standardized software architectures for vehicle industry.

However, during development, due to negligence or insufficient awareness of developers, some errors may occur during running of developed applications, which poses specific risks.

### SUMMARY

This application provides an application risk detection method and apparatus, which can perform risk detection on an application, so as to determine an object having a cross-operating system application risk in the application.

To achieve the foregoing objective, this application provides the following technical solutions.

According to a first aspect, this application provides an application risk detection method. The method includes: obtaining a calling relationship between M objects of an application, where M is greater than or equal to 2, and the object includes a function and/or a variable; and the calling relationship between the M objects includes at least one of a function accessing a variable, a first function calling a second function, a first variable referring to a second variable, or a variable referring to a function; and determining, based on the calling relationship between the M objects and an operating system application to which each object belongs, an object having a risk, where at least two operating system applications have different risk levels.

In the foregoing manner, an application risk detection can perform a risk detection on the application in advance to determine an object having a cross-operating system application risk in the application, so that a developer subsequently adjusts the application and eliminates the cross-operating system application risk.

In a possible implementation, the application risk detection simulates execution of machine code of the application to obtain a calling relationship between the M objects of the application.

Compared with a method for manually configuring a function pointer to obtain a calling relationship between objects in an application in a related technology, the method in this application can reduce workload of the developer, and improve efficiency and accuracy of determining a calling relationship between the M objects in the application. In addition, in this application, a binary file (machine code) of an application is processed without relying on source code, and does not need to run in a real environment, thereby reducing detection costs.

In a possible implementation, the method further includes: displaying the object having the risk.

In the foregoing manner, the developer can conveniently and intuitively obtain information about the object having the risk in the application, thereby improving user experience.

In a possible implementation, the method further includes: determining first information and/or second information based on the calling relationship between the M objects and the operating system application to which each object belongs, where the first information indicates a calling relationship between the object having the risk and another object, and the second information indicates an operating system application to which the object having the risk belongs; and displaying the first information and/or the second information.

In the foregoing manner, the developer may further obtain other information related to the object having the risk in the application, so that the developer modifies the application having the risk, thereby further improving user experience.

In a possible implementation, the method includes: obtaining a configuration file of the application, where the configuration file includes N sections and an operating system application to which each section belongs, and N is greater than or equal to 1; the N sections include the M objects; and each section includes a data section or a code section; and determining, based on the configuration file, the operating system application to which each object in the M objects belongs.

Optionally, the application risk detection apparatus can receive a configuration file of the application from the developer, and the configuration file includes N sections to which the M objects belong and an operating system application to which each section belongs. In the foregoing manner, the application risk detection apparatus can determine, based on the N sections to which the M objects belong and an operating system application to which each section belongs, an operating system application to which each object belongs, thereby determining whether the calling relationship between the M objects has a cross-operating system application risk.

In a possible implementation, the risk includes a cross-operating system application risk, and the M objects include a first object and a second object; and the determining, based on the calling relationship between the M objects and the operating system application to which each object belongs, the object having the risk includes: if the first object calls the second object, the first object belongs to a first operating system application, the second object belongs to a second operating system application, and the first operating system application is forbidden to access the second operating system application, determining that the first object has the cross-operating system application risk.

For example, when a vehicle functional safety integrity level of the first operating system application is equal to or lower than a vehicle functional safety integrity level of the second operating system application, it is determined that the first object has the cross-operating system application risk.

In a possible implementation, the configuration file includes a third-party library of the application, and the method further includes: parsing the third-party library of the application to obtain a calling relationship between L objects; and simulating execution of the application based on the calling relationship between the L objects, to obtain a calling relationship between H objects, where the H objects include the L objects and the M objects.

In the foregoing manner, the application risk detection can determine the calling relationship between the H objects based on the third-party library and the application, which can more comprehensively detect a data race risk existing in the application.

In a possible implementation, the configuration file further includes a thread entry function, and the determining the object having the risk includes: determining, if at least two thread entry functions call a same object, that the object has a data race risk.

For example, if thread entry function 1 and thread entry function 2 call variable 2, variable 2 has a data race risk.

According to a second aspect, this application provides an application risk detection apparatus, including: a transceiver module, configured to obtain a calling relationship between M objects of an application, where M is greater than or equal to 2, and the object includes a function and/or a variable; and the calling relationship between the M objects includes at least one of a function accessing a variable, a first function calling a second function, a first variable referring to a second variable, or a variable referring to a function; and a processing module, configured to determine, based on the calling relationship between the M objects and an operating system application to which each object belongs, an object having a risk, where at least two operating system applications have different risk levels.

In a possible implementation, the apparatus further includes: a display module, configured to display the object having the risk.

In a possible implementation, the processing module is further configured to determine first information and/or second information based on the calling relationship between the M objects and the operating system application to which each object belongs, where the first information indicates a calling relationship between the object having the risk and another object, and the second information indicates an operating system application to which the object having the risk belongs; and the display module is further configured to display the first information and/or the second information.

In a possible implementation, the transceiver module is further configured to obtain a configuration file of the application, where the configuration file includes N sections and an operating system application to which each section belongs, and N is greater than or equal to 1; the N sections include the M objects; and each section includes a data section or a code section; and the processing module is further configured to determine, based on the configuration file, the operating system application to which each object in the M objects belongs. In a possible implementation, the risk includes a cross-operating system application risk, and the M objects include a first object and a second object; and the processing module is further configured to: if the first object calls the second object, the first object belongs to a first operating system application, the second object belongs to a second operating system application, and the first operating system application is forbidden to access the second operating system application, determine that the first object has the cross-operating system application risk. In a possible implementation, the configuration file includes a third-party library of the application, and the processing module is further configured to: parse the third-party library of the application to obtain a calling relationship between L objects; and simulate execution of the application based on the calling relationship between the L objects, to obtain a calling relationship between H objects, where the H objects include the L objects and the M objects. In a possible implementation, the configuration file further includes a thread entry function, and the processing module is further configured to determine, if at least two thread entry functions call a same object, that the object has a data race risk.

According to a third aspect, this application provides an application risk detection system, including the application risk detection apparatus according to the second aspect.

According to a fourth aspect, this application provides a computer-readable storage medium. The computer-readable storage medium includes a computer program or instructions, and when the computer program or the instructions are run on an application risk detection apparatus, the application risk detection apparatus is enabled to perform the method according to the first aspect.

According to a fifth aspect, this application provides a chip system, including at least one processor and at least one interface circuit. The at least one interface circuit is configured to perform a transceiver function and send instructions to the at least one processor. When the at least one processor executes the instructions, the at least one processor performs the method according to any implementation of the first aspect.

According to a sixth aspect, this application further provides a computer program product, including instructions. When the instructions are run on a computer, the computer is enabled to perform the method according to any implementation of the first aspect.

According to a seventh aspect, this application further provides a circuit system. The circuit system includes a processing circuit, and the processing circuit is configured to perform the method according to the first aspect or any implementation of the first aspect.

For technical effects corresponding to the second aspect to the seventh aspect and any implementation of the second aspect to the seventh aspect, reference can be made to the technical effects corresponding to the first aspect and any implementation of the first aspect. Details are not described herein again.

### BRIEF DESCRIPTION OF DRAWINGS

FIG. 1 is a diagram of a cross-operating system application risk according to an embodiment of this application;
FIG. 2 is a diagram of a structure of an application risk detection apparatus according to an embodiment of this application;
FIG. 3 is a diagram of an application risk detection system according to an embodiment of this application;
FIG. 4 is a flowchart of an application risk detection method according to an embodiment of this application;
FIG. 5 is a diagram of a cross-operating system application risk according to an embodiment of this application;
FIG. 6 is a diagram of a data race risk according to an embodiment of this application;
FIG. 7 is a diagram of a structure of an application risk detection apparatus according to an embodiment of this application; and
FIG. 8 is a diagram of a structure of a chip system according to an embodiment of this application.

### DESCRIPTION OF EMBODIMENTS

Terms "including", "having", and any other variant thereof mentioned in descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word like "example" or "for example" is intended to present a related concept in a specific manner.

In descriptions of embodiments of this application, unless otherwise stated, "plurality of" means two or more than two. A term "and/or" in this specification describes only an association relationship between associated objects and indicates that there may be three relationships. For example, A and/or B may represent the following three cases: Only A exists, both A and B exist, and only B exists.

Features, structures, or characteristics in this application may be combined in one or more embodiments in any appropriate manner. Sequence numbers of the processes do not mean execution sequences in various embodiments of this application. The execution sequences of the processes should be determined based on functions and internal logic of the processes, and should not be construed as any limitation on implementation processes in embodiments of this application.

In some scenarios, some optional features in embodiments of this application may be independently implemented without depending on another feature, to resolve a corresponding technical problem and achieve corresponding effect. Alternatively, in some scenarios, the optional features may be combined with another feature based on a requirement.

In this application, unless otherwise specified, mutual reference may be made between same or similar parts of various embodiments. In embodiments of this application, unless otherwise specified or there is a logic conflict, terms and/or descriptions between different embodiments are consistent and may be mutually referenced, and technical features in different embodiments may be combined into a new embodiment based on an internal logical relationship thereof. Implementations of this application are not intended to limit the protection scope of this application.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

First, some technical terms used in embodiments of this application are described.

### 1. Operating system application (operating system application, OS-Application, OSA)

An operating system application is a concept of an AUTOSAR classic platform (classic platform, CP). One OSA represents one functional safety domain and corresponds to one automotive safety integrity level (automotive safety integrity level, ASIL). The OSA may have five automotive safety integrity levels, which are classified from low to high into QM, A, B, C, and D. Free calling is allowed between different functions/variables in a same OSA, but calling between functions/variables in OSAs of different automotive safety integrity levels is strictly restricted. A function/variable in an OSA of a low automotive safety integrity level cannot call a function/variable in an OSA of a high automotive safety integrity level, and calling is also not allowed between OSAs of a same automotive safety integrity level. If a function/variable in an OSA of an automotive safety integrity level is called in violation of a constraint, an operating system is trapped into an anomaly and stops working.

Optionally, some functions/variables may alternatively be located in a common library, and a function/variable in an OSA of each automotive safety integrity level can call a function/variable in the common library.

Optionally, a variable in embodiments of this application is a variable (global variable) whose lifecycle is the same as a system lifecycle.

### 2. Third-party library

A third-party library is a software library created and maintained by an independent developer or organization to enhance or extend functions of a programming language or framework.

In software development, third-party libraries are generally used to resolve specific problems, provide additional functions, or simplify implementation of common tasks. These libraries are generally shared and provided by other developers, and distributed and obtained through a package manager or an official website.

The third-party library may be a target file, that is, a to-be-linked binary file (which may be an xxx.o file) generated by a compiler, and stores code, data, and other linker-related information in a specific format. For example, code, data, and other linker-related information may be stored in formats such as an executable and linkable format (executable and linkable format, ELF) and a common object file format (common object file format, COFF). A symbol in the target file does not have a determined running address and thus cannot be executed. The symbol is a concept in a compiling link, and is a general term of a function, a variable, a constant, and the like.

The third-party library may alternatively be a static library (static library) that packs a plurality of target files together in order (for example, an xxx.a file), such as a C standard library (C standard library).

### 3. Section (section)

Symbols in a target file/executable file are classified and stored, based on same attributes (for example, read/write/executable attributes), in corresponding sections, such as a code section, a data section, a heap section, and a stack section. The executable file represents a linked binary file that can be loaded and executed, and running address are determined for the symbols in the binary file and the symbols can be executed.

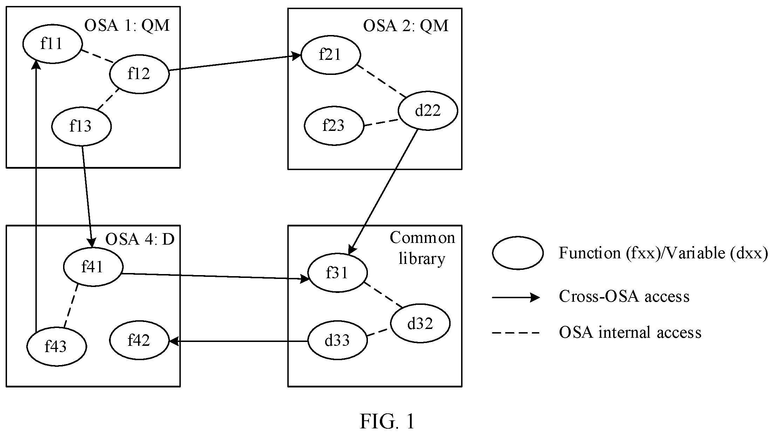

In one solution, the AUTOSAR CP has strict constraints on a case of a cross-operating system application accessing a function/variable. As shown in FIG. 1, FIG. 1 is a diagram of a relationship between a function/variable and an OSA. An automotive safety integrity level of OSA 1 is a QM level, and OSA 1 includes function f11, function f12, and function f13; an automotive safety integrity level of OSA 2 is a QM level, and OSA 2 includes function f21, variable d22, and function f23; a common library includes function f31, variable d32, and variable d33; and an automotive safety integrity level of OSA 4 is a D level, and OSA 4 includes function f41, function f42, and function f43.

A calling relationship f12->f21 (f12 calling f21) is cross-operating system application calling in violation of a constraint. The automotive safety integrity level of OSA 1 to which function f12 belongs is the QM level, the automotive safety integrity level of OSA 2 to which function f21 belongs is the QM level, and automotive safety integrity levels of OSA 1 and OSA 2 are the same. Therefore, function f12 cannot call function f21.

A calling relationship f13->f41 is cross-operating system application calling in violation of a constraint. The automotive safety integrity level of OSA 1 to which function f13 belongs is the QM level, the automotive safety integrity level of OSA 4 to which function f41 belongs is the D level, and the automotive safety integrity level of OSA 4 is higher than the automotive safety integrity level of OSA 1. Therefore, function f13 cannot call function f41.

A calling relationship f43->f11 is allowed cross-operating system application calling. The automotive safety integrity level of OSA 4 to which function f43 belongs is the D level, the automotive safety integrity level of OSA 1 to which function f11 belongs is the QM level, and the automotive safety integrity level of OSA 4 is higher than the automotive safety integrity level of OSA 1. Therefore, function f43 can call function f11.

Calling relationships f41->f31 and d22->f31 are allowed cross-operating system application calling. Function f31 is a function in the common library, and a function/variable in an OSA of each automotive safety integrity level can call a function/variable in the common library. Therefore, function f41 can call function f31, and variable d22 can call function f31.

In a calling relationship f23->d22->f31->d32->d33, d33->f42 is cross-operating system application calling in violation of a constraint. In the calling relationship, the automotive safety integrity level of OSA 2 to which function f23 belongs is the QM level, and the automotive safety integrity level of OSA 4 to which function f42 belongs is the D level. Therefore, the calling relationship is cross-operating system application calling in violation of a constraint, and variable d33 cannot call function f42.

During application development, a function/variable in the application is generally mapped to an incorrect OSA due to negligence or insufficient awareness of developers. As a result, an anomaly occurs when an operating system runs the application.

To resolve the foregoing problem, an embodiment of this application provides an application risk detection method. In the method, an application risk detection apparatus can obtain a calling relationship between M objects of an application, and determine, based on the calling relationship between the M objects and an operating system application to which each object belongs, an object having a risk. M is greater than or equal to 2, and the object includes a function and/or a variable. The calling relationship between the M objects includes at least one of a function accessing a variable, a first function calling a second function, a first variable referring to a second variable, or a variable referring to a function. At least two operating system applications have different risk levels. In this way, risk detection is performed on the application in advance to determine an object having a cross-operating system application risk in the application, so that a developer subsequently adjusts the application and eliminates the cross-operating system application risk.

In an embodiment, the application risk detection apparatus may be an independent maintenance and debugging device. Alternatively, the application risk detection apparatus may be an embedded device, and is used in development scenarios such as a vehicle-mounted device, a terminal device, and an industrial control device. Alternatively, the foregoing method may be integrated into a compiling procedure of the application. This is not specifically limited in embodiments of this application.

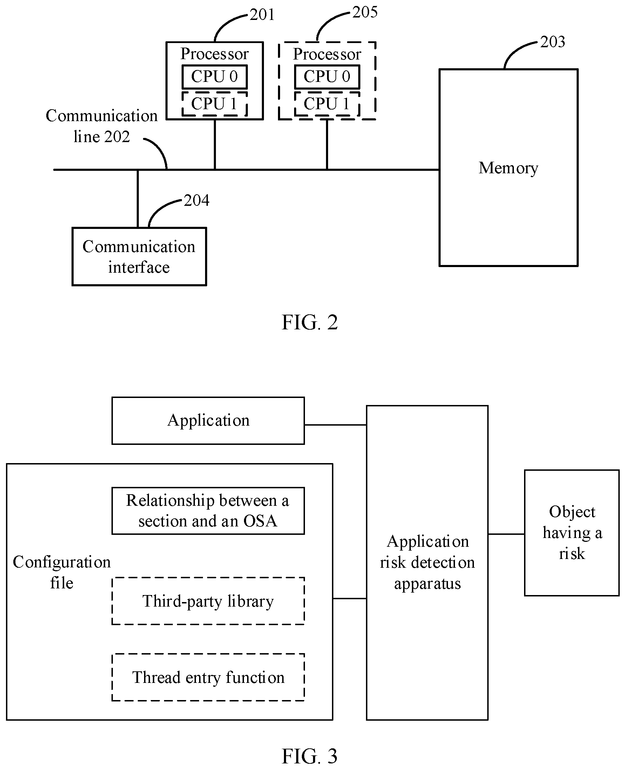

FIG. 2 is a diagram of a hardware structure of an application risk detection apparatus according to an embodiment of this application. The application risk detection apparatus includes at least one processor 201, a communication line 202, a memory 203, and at least one communication interface 204. The memory 203 may be a memory in the processor 201.

The processor 201 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor or any conventional processor.

The communication line 202 may include a path for transmitting information between the foregoing components.

The communication interface 204 is configured to communicate with another device. In this embodiment of this application, the communication interface may be a module, a circuit, a bus, an interface, a transceiver, or another apparatus that can implement a communication function. Optionally, when the communication interface is a transceiver, the transceiver may be an independently disposed transmitter, and the transmitter may be configured to send information to another device. Alternatively, the transceiver may be an independently disposed receiver, and is configured to receive information from another device. Alternatively, the transceiver may be a component that integrates functions of sending and receiving information. Specific implementation of the transceiver is not limited in this embodiment of this application.

In some embodiments, the communication interface may be a media interface. That is, an interface can be used as both a communication interface and a media interface.

The memory 203 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct Rambus RAM, DR RAM), or another magnetic storage device, or any other medium that can be used to carry or store expected program code in a form of instructions or data structures and that can be accessed by a computer, but is not limited thereto. The memory may exist independently, and is connected to the processor 201 through the communication line 202. The memory 203 may alternatively be integrated with the processor 201.

The memory 203 stores computer-executable instructions for implementing the solutions of this application, and the processor 201 controls execution. The processor 201 is configured to execute the computer-executable instructions stored in the memory 203, to implement an application risk detection method provided in following embodiments of this application.

Optionally, the computer-executable instructions in embodiments of this application may also be referred to as application code, instructions, a computer program, or another name. This is not specifically limited in embodiments of this application.

In a specific implementation, in an embodiment, the processor 201 may include one or more CPUs, for example, CPU 0 and CPU 1 in FIG. 2.

In a specific implementation, in an embodiment, the application risk detection apparatus may include a plurality of processors, for example, a processor 201 and a processor 205 in FIG. 2. Each of the processors may be a single-core (single-core) processor, or may be a multi-core (multi-core) processor.

It may be understood that structures illustrated in embodiments of this application does not constitute a specific limitation on the application risk detection apparatus. In some other embodiments of this application, the electronic device may include more or fewer components than those shown in the figure, or combine some components, or split some components, or have different component arrangements. The components shown in the figure may be implemented by hardware, software, or a combination of software and hardware.

FIG. 3 is a diagram of an application risk detection system according to an embodiment of this application. The application risk detection system includes an application risk detection apparatus.

Optionally, the application risk detection apparatus is configured to: receive machine code of an application and a configuration file of the application, and determine, based on the machine code of the application and the configuration file of the application, an object having a risk in the application.

Optionally, the configuration file of the application may include a relationship (subordinate relationship) between a section and an OSA.

In an embodiment, the configuration file of the application may further include a third-party library.

In an embodiment, the configuration file of the application may further include a thread entry function.

In an embodiment, the configuration file of the application may further include another file. This is not specifically limited in embodiments of this application.

Optionally, the application risk detection apparatus may also be referred to as a static scanning apparatus, a static scanning system, or the like.

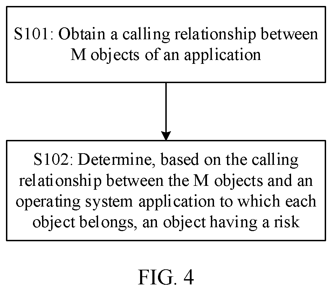

FIG. 4 is a flowchart of an application risk detection method according to an embodiment of this application. The method includes steps S101 and S102.

S101: An application risk detection apparatus obtains a calling relationship between M objects of an application.

M is greater than or equal to 2, and the object includes a function and/or a variable.

Optionally, the application risk detection apparatus can obtain machine code of the application and parse the machine code to obtain the M objects in the application.

In an embodiment, the application risk detection apparatus can simulate execution of each function in the application to obtain the calling relationship between the M objects in the application.

Optionally, the calling relationship between the M objects may include at least one of a function accessing a variable, a first function calling a second function, a first variable referring to a second variable, or a variable referring to a function.

In a scenario, the application includes a function call instruction. The function call instruction can record a calling relationship between a function and a function or between a function and a variable, and can save a call site, and cause the application to jump to a called object.

Optionally, the function call instruction may include a direct call instruction and an indirect call instruction.

The direct call instruction can directly obtain an address of a target object (called object) from the instruction.

Optionally, the indirect call instruction is an instruction that can perform calling by using a function pointer. The function pointer is a pointer variable pointing to a function, and can be used to store an address of the function, and call a corresponding function by using the pointer variable. The application risk detection apparatus can traverse all target objects that the function pointer may point to.

Optionally, when an object is called by using the function pointer, if a user specifies a target object, the application can preferentially call the target object specified by the application. The application risk detection apparatus can detect only whether a risk exists in a calling relationship in which the function calls the specified target function.

In another scenario, the application includes a computation instruction, and the application can perform computation based on semantics of the computation instruction, and can subsequently write a computational result into a target register.

Optionally, the computation instruction may include an assignment instruction, an arithmetic instruction, and the like. This is not specifically limited in embodiments of this application.

In another scenario, the application includes a jump instruction.

Optionally, the jump instruction causes execution of only some function instructions to be simulated. Therefore, when simulating execution of the application, the application risk detection apparatus may ignore the jump instruction, and simulate execution of all applications, to ensure that calling relationships between all objects are obtained.

Optionally, an instruction unrelated to a result in the application may also be ignored, for example, an operating system state instruction, an interrupt disabling instruction, and an interrupt enabling instruction.

In another scenario, the application includes a memory write instruction. The memory write instruction indicates that the application writes a value into a memory.

In another scenario, the application includes a memory read instruction. The memory read instruction indicates that the application reads a value from the memory.

Optionally, if the application reads a value from the memory for an initial time, that is, when the application starts execution, an operating system allocates memory for the application, and loads an initial value of a variable in a data section to a corresponding memory position. Subsequently, when performing execution, the application can read the initial value of the variable by accessing the variable in memory.

Optionally, a pointer is a variable storing a memory address, and data in the memory can be indirectly accessed and modified by using the pointer. A plurality of function pointers can be stored in the variable. When the application reads the memory address, if the read memory address corresponds to a variable of the application, functions in storage space of the variable can be searched and recorded, and saved as a function list. When the application calls an object by using the function pointer, the function list can be traversed to improve efficiency of simulating execution.

Optionally, the application may further include other instructions, which are not listed in detail in embodiments of this application.

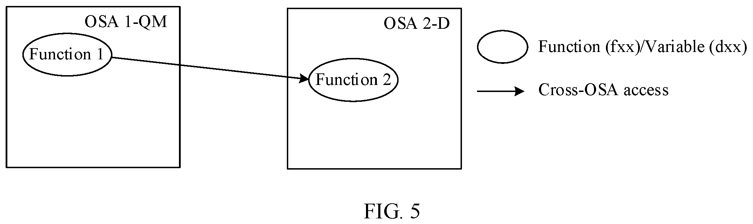

For example, as shown in FIG. 5, a calling relationship between objects in the application, which is obtained by simulating execution of each function in the application, may be that function 1 (an example of a first object) -> function 2 (an example of a second object), that is, function 1 calls function 2.

In another embodiment, the application risk detection apparatus can directly read a function calling relationship specified by the user.

For example, after determining the function calling relationship in the application, the user can directly send the function calling relationship to the application risk detection apparatus.

S102: The application risk detection apparatus determines, based on the calling relationship between the M objects and an operating system application to which each object belongs, an object having a risk.

Optionally, the application risk detection apparatus can also parse machine code of the application to obtain a section to which each object of the application belongs.

For example, the application includes function 1 and function 2, where function 1 is located in section 1, and function 2 is located in section 2.

Optionally, the application risk detection apparatus can obtain a configuration file of the application, where the configuration file includes N sections and an operating system application to which each section belongs. N is greater than or equal to 1; the N sections include the M objects in the application; and each section includes a data section or a code section.

For example, the configuration file includes section 1 and section 2, where section 1 belongs to operating system application 1, and section 2 belongs to operating system application 2. An automotive safety integrity level of operating system application 1 is a QM level, and an automotive safety integrity level of operating system application 2 is a D level.

Optionally, the application risk detection apparatus can determine first information and/or second information based on the calling relationship between the M objects and the operating system application to which each object belongs, where the first information indicates a calling relationship between the object having the risk and another object, and the second information indicates an operating system application to which the object having the risk belongs.

For example, function 1 belongs to operating system application 1, and function 2 belongs to operating system application 2. Therefore, in the calling relationships between the objects in the application, function 1 calling function 2 is a cross-operating system application calling relationship in violation of a constraint. Function 1 has a cross-operating system application risk, and an operating system application to which function 1 belongs is operating system application 1.

Optionally, the application risk detection apparatus can display an object having the cross-operating system application risk.

For example, the application risk detection apparatus can display function 1.

Optionally, the application risk detection apparatus can further display a calling relationship having the cross-operating system application risk.

For example, the application risk detection apparatus can display a calling relationship of function 1 calling function 2.

Optionally, the application risk detection apparatus can further display the operating system application to which the object having the cross-operating system application risk belongs.

For example, the application risk detection apparatus can display operating system application 1 to which function 1 belongs.

In another embodiment, the application risk detection apparatus may alternatively send information such as the object having the risk, the first information, and the second information to another device.

For example, the application risk detection apparatus may alternatively send the information such as the object having the risk, the first information, and the second information to a terminal device of the developer. The developer obtains the information such as the object having the risk, the first information, and the second information via the terminal device.

Optionally, the developer may subsequently modify the application based on the object having the risk in the application, the calling relationship, and the operating system application to which the object belongs, so as to ensure that no cross-operating system application risk occurs in the application.

In another possible scenario, the application may alternatively have a data race risk, and a data race may also cause a plurality of unexpected errors to occur in the application, bringing an unpredictable and serious consequence to the operating system.

In an implementation, static scanning may be performed on the application to determine an object having the data race risk. However, in this method, a function pointer needs to be manually configured, and a workload of manual analysis and configuration is huge, and an error is prone to occurring.

For example, for the following application:

```
          int var
          var=0
          void thread1 ()
          {
          var++
          }
          void thread2 ()
          {
          var++
          }
```

The developer expects the variable var to have a value of 2 in the application. However, an actual execution process of the application may be as follows: int: 0=>var; thread1: var+1; thread2: var+1; thread2: 1=>var; thread1: 1=>var. An obtained actual value of var may be 1, and var has the data race risk.

In embodiments of this application, simulated execution may be performed on the application. In a process of simulated execution, all target objects that the function pointer may point to can be traversed. The function pointer does not need to be manually configured, thereby improving efficiency of determining the data race risk.

In an embodiment, the configuration file of the application obtained by the application risk detection apparatus may further include a thread entry function.

Optionally, the application risk detection apparatus may determine, based on the thread entry function and the calling relationship between the M objects, the object having the risk.

Optionally, if at least two thread entry functions call a same object, it is determined that the object has a data race risk. A thread entry function that calls the object is a thread entry function that causes the data race risk, and a calling relationship related to the object is a calling relationship that causes the data race risk.

The application risk detection apparatus may display the object having the data race risk, the thread entry function that causes the data race risk, and the calling relationship that causes the data race risk.

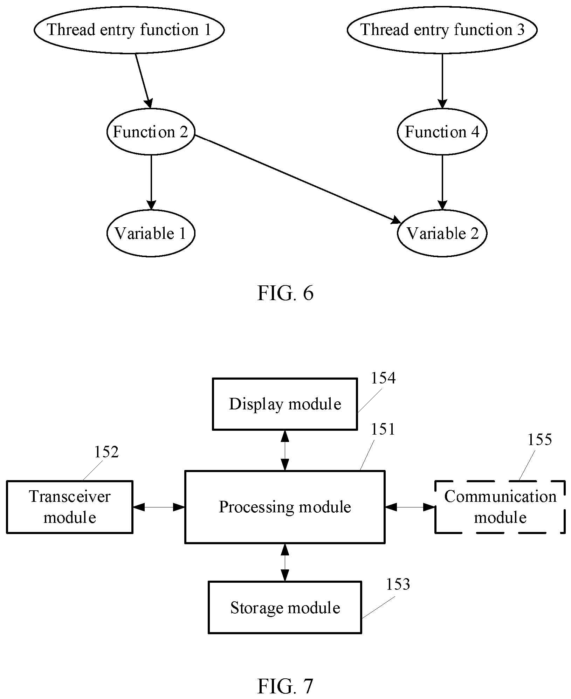

For example, as shown in FIG. 6, FIG. 6 is a diagram of a data race, including calling relationships: thread entry function 1->function 2->variable 1, thread entry function 1->function 2->variable 2, and thread entry function 3->function 4->variable 2.

If variable 2 is called by both thread entry function 1 and thread entry function 3, variable 2 has a data race risk, thread entry function 1 and thread entry function 3 are thread entry functions that cause the data race risk, and thread entry function 1->function 2->variable 2 and thread entry function 3->function 4->variable 2 are calling relationships that cause the data race risk.

In an embodiment, the configuration file of the application obtained by the application risk detection apparatus may further include a third-party library.

Optionally, the application risk detection apparatus can parse the third-party library of the application to obtain a calling relationship between L objects.

Optionally, the calling relationship between the L objects can be reflected in a relocation table of an unconnected third-party library. The relocation table is output by the compiler and describes a set of relocation information in a section, and relocation is accomplished by a linker. The relocation information may include a position to be relocated, a relocation type, and information about a dependent target object.

Optionally, relocation means determining a running address of an object. When an object calls a target object, a running address of the target object needs to be known. However, in most cases, the running address of the target object cannot be known in a compiling phase. In this case, an object whose running address is not determined needs to be handed over to the linker to accomplish relocation, so as to determine the address of the target object.

For calling between objects within a same source code file, the application directly determines a jump target address in the compiling phase without the involvement of the linker. Therefore, the calling is not reflected in the relocation table of the third-party library. Therefore, relying solely on the relocation table may result in missing calling relationships between some objects.

Optionally, the application risk detection apparatus can simulate execution of the application based on the calling relationship between the L objects in the third-party library. When the application is simulated for execution, the application may call the object in the third-party library, and thus the application risk detection apparatus can obtain a calling relationship between H objects. The H objects include the L objects and the M objects described above. That is, the application risk detection apparatus can obtain calling relationships between all objects in the application and in the third-party library, and can detect a data race risk existing in the application more comprehensively.

In an embodiment, the configuration file of the application risk detection apparatus may not include a third-party library, and the application risk detection apparatus needs to simulate execution of each instruction in the application to determine a case in which the application calls the third-party library.

In this method, external input is simplified, a third-party library does not need to be input, a case in which the application calls the third-party library can also be determined, calling relationships between objects in the application and in the third-party library are obtained, and a data race risk existing in the application can be detected more comprehensively.

In an embodiment, the configuration file of the application risk detection apparatus may further include a function pointer, so as to improve efficiency of the application risk detection apparatus during simulated execution.

Data contention risks widely exist in various scenarios, such as smartphones, smart homes, and industrial control. Therefore, the application risk detection apparatus can detect a data race risk in an application compiling process of a smartphone, a smart home device, or an industrial control device, so as to eliminate the data race risk.

In another embodiment, the configuration file of the application risk detection apparatus may further include another file to determine another corresponding risk. For example, the configuration file of the application risk detection apparatus includes a file related to shared memory, and the application risk detection apparatus can determine a risk of data consistency of shared memory, and the like.

It should be noted that some operations in procedures of the foregoing method embodiments are randomly combined, and/or a sequence of some operations is randomly changed. In addition, an execution sequence between steps of each procedure is merely an example, and does not constitute a limitation on an execution sequence between the steps. The steps may alternatively be performed in another execution sequence. It is not intended to indicate that the execution sequence is the only sequence in which these operations can be performed. A person of ordinary skill in the art may figure out a plurality of manners to reorder the operations described in this specification. In addition, it should be noted that process details involved in a specific embodiment in this specification are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some usage scenarios. Alternatively, another possible step may be added to the method embodiments.

In addition, the method embodiments may be implemented separately or in combination.

Some other embodiments of this application provide an apparatus. The apparatus may be an application risk detection apparatus or a component (for example, a chip system) in an application risk detection apparatus.

The apparatus may include a memory and one or more processors. The memory is coupled to the processor. The memory is configured to store computer program code, and the computer program code includes computer-executable instructions. When the processor executes the computer-executable instructions, the electronic device can perform functions or steps performed by the application risk detection apparatus in the foregoing method embodiments.

A core structure of the application risk detection apparatus may be shown in FIG. 7, that is, includes a processing module 151, a transceiver module 152, a storage module 153, and a display module 154.

The processing module 151 may include at least one of a central processing unit (CPU), an application processor (application processor), or a communication processor (communication processor). The processing module 151 can perform an operation or data processing related to control and/or communication of at least one of other elements of the application risk detection apparatus. Optionally, the processing module 151 is configured to support the application risk detection apparatus in performing S102 in FIG. 4.

The transceiver module 152 is configured to obtain an application (machine code of an application) and/or a configuration file of the application that are/is input by the developer, and transmit the obtained application (machine code of the application) and/or the configuration file of the application to another module of the application risk detection apparatus. The transceiver module 152 is further configured to send an object having a risk and/or first information and/or second information to another device.

The storage module 153 is configured to search for and store, when the application reads a memory address and if the read memory address corresponds to a variable of the application, a function in storage space of the variable. When the application calls an object by using the function pointer, the function list can be traversed to improve efficiency of simulating execution.

The display module 154 is configured to display the object having the risk and/or the first information and/or the second information.

Optionally, the application risk detection apparatus may further include a communication module 155, configured to support communication between the application risk detection apparatus and another personal apparatus (through a communication network). For example, the communication module may be connected to a network through wireless communication or wired communication to communicate with the another personal apparatus or a network server. The wireless communication may use at least one of cellular communication protocols, for example, 5G, long term evolution (LTE), long term evolution advanced (LTE-A), code division multiple access (CDMA), wideband code division multiple access (WCDMA), universal mobile telecommunications system (UMTS), wireless broadband (WiBro), or a global system for mobile communication (GSM). The wireless communication may include, for example, short-range communication. The short-range communication may include at least one of wireless fidelity (Wi-Fi), Bluetooth, near field communication (NFC), magnetic stripe transmission (MST), or GNSS. For example, the application risk detection apparatus sends the object having the risk and/or the first information and/or the second information to another device.

The apparatus shown in FIG. 7 may further include more or fewer components, or some components may be split, or another component layout may be used. This is not limited in embodiments of this application.

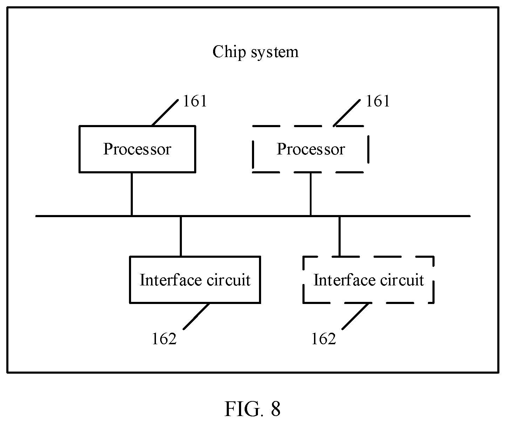

An embodiment of this application further provides a chip system. As shown in FIG. 8, the chip system includes at least one processor 161 and at least one interface circuit 162. The processor 161 and the interface circuit 162 may be interconnected through a line. For example, the interface circuit 162 may be configured to receive data from another apparatus (for example, a memory of an electronic device). For another example, the interface circuit 162 may be configured to send data to another apparatus (for example, the processor 161). For example, the interface circuit 162 may read instructions stored in a memory, and send the instructions to the processor 161. When the instructions are executed by the processor 161, the electronic device is enabled to perform the steps in the foregoing embodiments. Certainly, the chip system may further include another discrete component. This is not specifically limited in embodiments of this application.

An embodiment of this application further provides a computer storage medium. The computer storage medium includes computer-executable instructions. When the computer-executable instructions are run on the foregoing electronic device, the electronic device is enabled to perform functions or steps performed by the mobile phone in the foregoing method embodiments. The foregoing storage medium includes any medium that can store program code, for example, a USB flash drive, a removable hard disk, a read only memory (read only memory, ROM), a random access memory (random access memory, RAM), a magnetic disk, or an optical disc.

An embodiment of this application further provides a computer program product. When the computer program product is run on a computer, the computer is enabled to perform functions or steps performed by the mobile phone in the foregoing method embodiments.

The foregoing descriptions about implementations allow a person skilled in the art to clearly understand that, for the purpose of convenient and brief description, division of the foregoing functional modules is used as an example for illustration. In actual application, the foregoing functions can be allocated to different modules and implemented based on a requirement, that is, an inner structure of an apparatus is divided into different functional modules to implement all or some of the functions described above. For a detailed working process of the system, apparatus, and module described above, reference can be made to a corresponding process in the foregoing method embodiments. Details are not described herein again.

In the several embodiments provided in this application, it should be understood that the disclosed apparatus and method may be implemented in other manners. For example, the apparatus embodiments described above are merely examples. For example, division into the modules or units is merely logical function division, and may be other division in an actual implementation. For example, a plurality of units or components may be combined or may be integrated into another apparatus, or some features may be ignored or not performed. In addition, mutual coupling or direct coupling or communication connection displayed or discussed may be indirect coupling or communication connection through some interfaces, apparatuses, or units, and may be in electrical, mechanical or another form.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in the form of a software product. The software product is stored in a storage medium and includes several instructions for enabling a device (which may be a single-chip microcomputer, a chip or the like) or a processor (processor) to perform all or some of the steps of the methods described in embodiments of this application. The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An application risk detection method, wherein the method comprises:
obtaining a calling relationship between M objects of an application, wherein M is greater than or equal to 2, and the object comprises a function and/or a variable; and the calling relationship between the M objects comprises at least one of a function accessing a variable, a first function calling a second function, a first variable referring to a second variable, or a variable referring to a function; and
determining, based on the calling relationship between the M objects and an operating system application to which each object belongs, an object having a risk, wherein at least two operating system applications have different risk levels.

2. The method according to claim 1, wherein the method further comprises:
displaying the object having the risk.

3. The method according to claim 1 or 2, wherein the method further comprises:
determining first information and/or second information based on the calling relationship between the M objects and the operating system application to which each object belongs, wherein the first information indicates a calling relationship between the object having the risk and another object, and the second information indicates an operating system application to which the object having the risk belongs; and
displaying the first information and/or the second information.

4. The method according to any one of claims 1 to 3, wherein the method comprises:
obtaining a configuration file of the application, wherein the configuration file comprises N sections and an operating system application to which each section belongs, and N is greater than or equal to 1; the N sections comprise the M objects; and each section comprises a data section or a code section; and
determining, based on the configuration file, the operating system application to which each object in the M objects belongs.

5. The method according to any one of claims 1 to 4, wherein the risk comprises a cross-operating system application risk, and the M objects comprise a first object and a second object; and the determining, based on the calling relationship between the M objects and the operating system application to which each object belongs, the object having the risk comprises:
if the first object calls the second object, the first object belongs to a first operating system application, the second object belongs to a second operating system application, and the first operating system application is forbidden to access the second operating system application, determining that the first object has the cross-operating system application risk.

6. The method according to any one of claims 1 to 3, wherein the configuration file comprises a third-party library of the application, and the method further comprises:
parsing the third-party library of the application to obtain a calling relationship between L objects; and
simulating execution of the application based on the calling relationship between the L objects, to obtain a calling relationship between H objects, wherein the H objects comprise the L objects and the M objects.

7. The method according to any one of claims 1 to 6, wherein the configuration file further comprises a thread entry function, and determining the object having the risk comprises:
determining, if at least two thread entry functions call a same object, that the object has a data race risk.

8. An application risk detection apparatus, comprising:
a transceiver module, configured to obtain a calling relationship between M objects of an application, wherein M is greater than or equal to 2, and the object comprises a function and/or a variable; and the calling relationship between the M objects comprises at least one of a function accessing a variable, a first function calling a second function, a first variable referring to a second variable, or a variable referring to a function; and
a processing module, configured to determine, based on the calling relationship between the M objects and an operating system application to which each object belongs, an object having a risk, wherein at least two operating system applications have different risk levels.

9. The apparatus according to claim 8, wherein the apparatus further comprises:
a display module, configured to display the object having the risk.

10. An application risk detection system, comprising the application risk detection apparatus according to claim 8 or 9.

11. A computer-readable storage medium, wherein the computer-readable storage medium comprises a computer program or instructions, and when the computer program or the instructions are run on an application risk detection apparatus, the application risk detection apparatus is enabled to perform the method according to any one of claims 1 to 7.
